# EUROPÄISCHE PATENTSCHRIFT

(11) **EP 2 113 334 B1**
(45) Veröffentlichungstag und Bekanntmachung des Hinweises auf die Patenterteilung: **13.04.2011**
(21) Anmeldenummer: 09002363.1
(22) Anmeldetag: 19.02.2009
(51) Int. Cl.: B23Q 1/28, B23Q 1/54, B23Q 11/00

(54) **Bearbeitungszentrum mit dreh- und schwenkbarem Werkstücktisch mit einer Klemmeinrichtung für die Schwenkachse**
Processing centre with rotatable and pivotable workpiece table with a clamp device for the pivoting axle
Centre de traitement doté d'une table de pièce à usiner rotative et pivotante dotée d'un dispositif de serrage pour l'axe pivotant

(30) Priorität: 29.04.2008 DE 102008021416
(43) Veröffentlichungstag der Anmeldung: 04.11.2009
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl.-Ing (FH), 78598 Königsheim (DE)
(74) Vertreter: Hager, Thomas Johannes

(56) Entgegenhaltungen:
- EP-A- 1 262 275
- DE-U1- 20 121 653
- US-B1- 6 332 604

## Beschreibung

Die Erfindung betrifft ein Bearbeitungszentrum zum Bohren, Fräsen oder Drehen oder Schleifen mit einer um eine horizontale Achse schwenkbar zwischen zwei Lagerwandungen gelagerten Schwenkbrücke, mit wenigstens einem Antriebszahnkranz, der an einem scheibenartigen Anschlussstück der Schwenkbrücke angebracht ist, mit wenigstens einem Antriebssystem, das außen an der Lagerwandung angebracht ist und mit dem Antriebszahnkranz der Schwenkbrücke in einer Wirkverbindung steht.

Moderne Bearbeitungszentren für die spanende Werkstückbearbeitung durch Bohren, Fräsen oder Drehen oder Schleifen werden zunehmend mit dreh- und schwenkbaren Werkstücktischen ausgestattet. Mit so einem Bearbeitungszentrum kann durch Drehen und Schwenken des Werkstücktisches das Werkstück in nahezu jede beliebige Raumlage gebracht werden, ohne dass die ursprüngliche Einspannung des Werkstückes auf dem Werkstücktisch gelöst werden muss. Somit kann nahezu jeder beliebige Raumwinkel am Werkstück zum Beispiel durch Bohren oder Fräsen in einer Werkstückaufspannung bearbeitet werden.

In der Regel ist der drehbare Werkstücktisch zur Aufnahme des zu bearbeitenden Werkstückes auf einer so genannten Schwenkbrücke angeordnet. Die Schwenkbrücke ist üblicherweise beidseitig gelagert und kann in der Regel um eine horizontale Achse verschwenkt werden. Es sind aber auch Ausführungen geläufig, bei denen die Schwenkbrücke nur einseitig gelagert wird.

Beim Start eines Bearbeitungszyklus wird die Schwenkbrücke in eine vorbestimmte Winkellage verschwenkt und dann mit Hilfe einer Halteeinrichtung in dieser Position sicher fixiert. Erst dann wird die entsprechende Bohr- oder Fräsbearbeitung am Werkstück durchgeführt. Bei der spanenden Bohr- oder Fräsbearbeitung können zum Teil sehr große Bearbeitungskräfte bzw. Bearbeitungsmomente auftreten. Diese Bearbeitungskräfte bzw. Bearbeitungsmomente müssen von der Halteeinrichtung der Schwenkbrücke sicher aufgenommen werden, ansonsten würde die Schwenkbrücke aufgrund der Bearbeitungskräfte bzw. Bearbeitungsmomente aus der vorbestimmten Position gedrückt werden. Des Weiteren muss die Halteeinrichtung der Schwenkbrücke auch noch eine so genannte Fail-Safe-Funktionalität aufweisen. Es muss sichergestellt sein, dass bei einem Energieausfall die Halteeinrichtung weiterhin funktioniert, so dass ein unkontrolliertes Verschwenken bzw. Austrudeln der Schwenkbrücke aufgrund der Schwerkraft ausgeschlossen werden kann.

In der EP 1 262 275 B1 ist ein gattungsgleicher dreh- und schwenkbarer Werkstücktisch mit Schwenkbrücke beschrieben. Die in der EP 1 262 275 B1 offenbarte Schwenkbrücke ist beidseitig gelagert und kann um eine horizontal ausgerichtet Schwenkachse verschwenkt werden. Die Schwenkbrücke wird direkt über ihren Antriebszahnkranz durch einen außen an der Lagerwandung angeordneten Antriebsmotor angetrieben, so dass sich ein kurzer Kräftefluss und keinerlei Torsionsbeanspruchung der Lagerzapfen ergibt. Eine Halteeinrichtung für die Schwenkbrücke mit Fail-Safe-Funktionalität ist in der EP 1 262 275 B1 nicht explizit offenbart. Es ist aber Stand der Technik, dass bei der in der EP 1 262 275 B1 offenbarten Antriebsanordnung der Antriebsmotor in der Regel immer mit einer integrierten Motorklemmung ausgestattet ist. Diese integrierte Motorklemmung arbeitet nach dem Dauermagnetprinzip. Das heißt, geklemmt wird im stromlosen Zustand. Die Lüftung der Klemmung erfolgt elektromagnetisch. Beim Ausschalten des Bearbeitungszentrums (Hauptschalter AUS und Bearbeitungszentrum von der Energieversorgung galvanisch getrennt) oder bei einen unvorhersehbaren Energieausfall wird die Klemmnabe vom Magnetkörper angezogen und dadurch die Motorwelle des Antriebsmotors festgehalten. Die Motorklemmung ist auch für eine bestimmte Anzahl von Notbremsungen, dass heißt für Bremsungen aus der Bewegung heraus bei Not-Aus oder Energieausfall, ausgelegt. Eine Fail-Safe-Funktionalität der Halteeinrichtung für die Schwenkbrücke ist somit gewährleistet.

Die Motorklemmung ist aber nicht dafür ausgelegt und geeignet, die Schwenkbrücke bei einem Bearbeitungsvorgang winkelgenau in der Bearbeitungsposition zu halten. Für diesen Zweck muss die Schwenkbrücke im vorliegenden Fall über die Positionsregelung des Antriebsmotors in der Bearbeitungsposition gehalten werden. Diese quasi "elektronische" Klemmung gewährleistet die winkelgenaue Bearbeitungsposition der Schwenkbrücke. Im vorliegenden Fall besteht die Halteeinrichtung der Schwenkbrücke aus zwei Elementen. Eine mechanische Motorklemmung für die Fail-Safe-Funktionalität bei Energieausfall oder Not-Aus (Notklemmung bzw. Notbremsung) und eine "elektronische" Klemmung für die winkelgenaue Positionierung der Schwenkbrücke beim Bearbeitungsvorgang (Betriebsklemmung).

Die Halteeinrichtung für die in der EP 1 262 275 B1 offenbarte Schwenkbrücke hat folgende Nachteile:
Zur Aufrechterhaltung der Betriebsklemmung für die Schwenkbrücke muss die "elektronische Klemmung" und somit die Antriebsregelung der betreffenden Drehachse zum Teil über Stunden aktiviert sein. Was zum Teil einen erheblichen elektrischen Energieverbrauch zur Folge hat.

Ausgehend von diesem Stand der Technik liegt der vorliegenden Erfindung daher die Aufgabe zugrunde, das bekannte Bearbeitungszentrum unter Beibehaltung seiner Vorteile dahingehend weiter zu verbessern, dass die Betriebsklemmung der Schwenkbrücke ohne Antriebsregelung realisiert werden kann und dass die Betriebsklemmung weitgehend spielfrei ist und auch größte Bearbeitungsmomente sicher und genau aufnehmen kann.

Erfindungsgemäß wird die Aufgabe durch folgende Merkmale gelöst:
Bearbeitungszentrum zum Bohren, Fräsen oder Drehen oder Schleifen mit einer um eine horizontale Achse schwenkbar zwischen zwei Lagerwandungen gelagerten Schwenkbrücke, mit wenigstens einem Antriebszahnkranz, der an einem scheibenartigen Anschlussstück der Schwenkbrücke angebracht ist, mit wenigstens einem Antriebssystem, das außen an der Lagerwandung angebracht ist und mit dem Antriebszahnkranz der Schwenkbrücke in einer Wirkverbindung steht, wobei die Betriebsklemmung der Schwenkbrücke mit einem reibschlüssigen Klemmsystem erfolgt, das kreisringförmig um den Lagerzapfen der Schwenkbrücke herum drehfest angeordnet ist und mit dem scheibenartigen Anschlussstück in einer Wirkverbindung steht und dass die Klemmkraft des reibschlüssigen Klemmsystems durch einen Energiespeicher erzeugt wird.

Da die Klemmkraft für die Betriebsklemmung erfindungsgemäß durch einen Energiespeicher erzeugt wird, wird die Antriebsregelung der Schwenkbrücke für die Betriebsklemmung nicht mehr benötigt.

Da weiterhin das reibschlüssige Klemmsystem außen um den Lagerzapfen herum geführt wird, kann ein größtmöglicher Durchmesser für das Klemmsystem gewählt werden. Damit weist das Klemmsystem einen möglichst großen Hebelarm und somit eine größtmögliche Klemmkraft auf.

Da das Klemmsystem mit dem scheibenartigen Anschlussstück der Schwenkbrücke in einer unmittelbaren Wirkverbindung steht, ergibt sich ein kurzer Kraftflussweg beim Klemmen der Schwenkbrücke. Dies ist sehr vorteilhaft für die statische und dynamische Steifigkeit der Betriebsklemmung.

Vorteilhafte Weiterbildungen und Ausgestaltungen ergeben sich aus den Unteransprüchen.

Gemäß einer vorteilhaften Weiterbildung besteht der Energiespeicher zur Erzeugung der Klemmkraft für die Betriebsklemmung aus einem mechanischen Federspeicher. Ein mechanischer Federspeicher ist besonders einfach zu realisieren und auch kostengünstig, da mechanische Federspeicher als allgemein gebräuchliches Maschinenelement in beliebiger Ausführung zu Verfügung stehen. Darüber hinaus erfordert ein mechanischer Federspeicher auch keinen großen Steuerungsaufwand, um die Klemmkraft zu erzeugen.

Alternativ kann der Energiespeicher zur Erzeugung der Klemmkraft für die Betriebsklemmung auch aus einem hydraulischen oder pneumatischen Druckspeicher bestehen.

Vorzugsweise besteht der mechanische Federspeicher aus mehreren ringförmig angeordneten Federn oder aus einer ringförmig angeordneten radial elastisch verformbaren Membrane in Scheibenform. Infolge einer derartigen Ausgestaltung kann eine großflächige Klemmung erzeugt werden, was wiederum zu einer hohen Klemmkraft führt.

Nach einer bevorzugten Ausgestaltung ist das reibschlüssige Klemmsystem mit einem Druckstück versehen, welches von dem Federspeicher in Richtung auf den Antriebszahnkranz belastet ist. Ein derartiges Duckstück kann eine hohe Klemmkraft auf den Antriebszahnkranz übertragen und dadurch eine sichere Klemmung gewährleisten.

Nach einer vorteilhaften Ausgestaltung weist das reibschlüssige Klemmsystem für die Betriebsklemmung eine Fail-Safe-Funktionalität auf derart, dass bei Energieausfall zwangsläufig mit dem Energiespeicher geklemmt wird. Infolge dieser Ausgestaltung wird eine Fail-Safe-Funktionalität in das reibschlüssige Klemmsystem integriert, ohne dass zusätzliche mechanische Einrichtungen vorgesehen werden müssen. Das Klemmsystem hat somit eine Doppelfunktion, indem es zum einen die Schwenkbrücke in der gewünschten Stellung klemmt und zum anderen als Fail-Safe-Sicherung wirkt.

Um eine symmetrische Krafteinleitung der Klemmkraft in die Schwenkbrücke zu gewährleisten, ist vorteilhafterweise das reibschlüssige Klemmsystem für die Betriebsklemmung beidseitig an den Lagerwandungen der Schwenkbrücke angeordnet.

Weiterhin ist das reibschlüssige Klemmsystem für die Betriebsklemmung nach einer bevorzugten Ausgestaltung als kreisringförmiges Radial-Klemmsystem ausgeführt.

Dabei erfolgt die Klemmung vorteilhafterweise radial nach außen oder nach innen derart, dass das Druckstück beim Klemmen nach außen bzw. nach innen gedrückt wird.

Das kreisringförmige Radial-Klemmsystem wirkt bevorzugt auf den Antriebszahnkranz der Schwenkbrücke ein. Dabei klemmt das kreisringförmige Radial-Klemmsystem vorzugsweise nach außen auf den Antriebszahnkranz die Schwenkbrücke.

Alternativ kann das kreisringförmige Radial-Klemmsystem auch auf das scheibenartige Anschlussstück der Schwenkbrücke einwirken.

In diesem Fall klemmt das kreisringförmige Radial-Klemmsystem vorteilhafterweise nach innen auf das scheibenartige Anschlussstück der Schwenkbrücke.

Nach einer vorteilhaften Weiterbildung weist die Schwenkbrücke des erfindungsgemäßen Bearbeitungszentrums zwei unabhängig voneinander wirkende Klemmsysteme mit Fail-Safe-Funktionalität auf, nämlich ein erstes Klemmsystem gebildet durch eine Motorklemmung mit Fail-Safe-Funktionalität am Antriebsmotor der Schwenkbrücke und ein zweites Klemmsystem gebildet durch das Klemmsystem mit Fail-Safe-Funktionalität an den Lagerzapfen der Schwenkbrücke.

Weitere Einzelheiten, Merkmale und Vorteile der Erfindung ergeben sich aus der nachfolgenden Beschreibung anhand der Zeichnungen. Es zeigen:
- Figur 1:: eine Detailansicht einer ersten Ausführungsform eines erfindungsgemäßen Bearbeitungszentrums mit gelöstem Klemmsystem,
- Figur 2:: eine Detailansicht einer zweiten Ausführungsform des erfindungsgemäßen Bearbeitungszentrums mit gelöstem Klemmsystem,
- Figur 3:: eine Detailansicht nach Figur 1 mit gespanntem Klemmsystem,
- Figur 4:: eine Detailansicht einer dritten Ausführungsform des erfindungsgemäßen Bearbeitungszentrums mit gespanntem Klemmsystem,
- Figur 5:: eine Gegenüberstellung des erfindungsgemäßen Be- arbeitungszentrums mit einem Bearbeitungszentrum nach dem Stand der Technik.

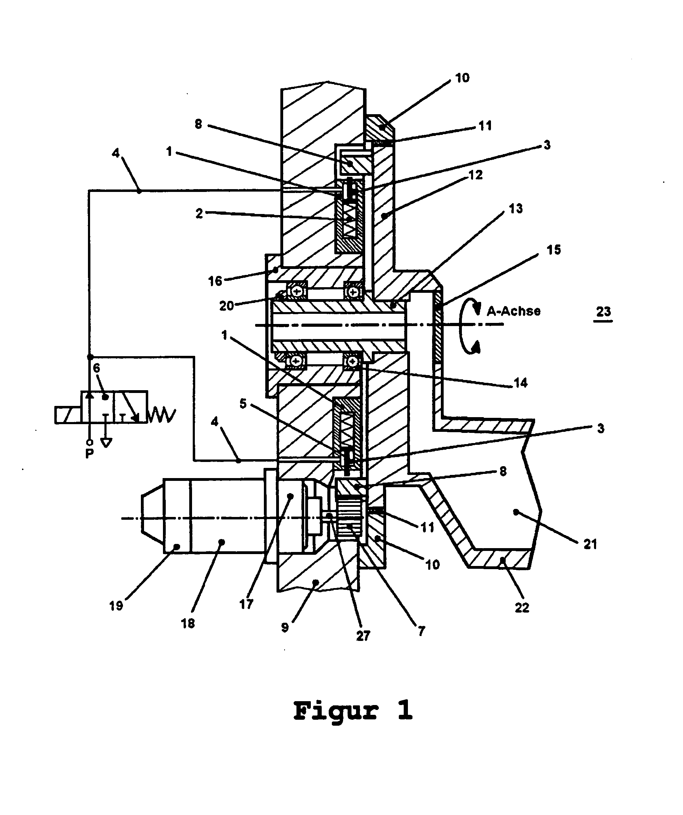

In Figur 1 ist eine erste Ausführungsform eines erfindungsgemäßen Bearbeitungszentrums im hier interessierenden Bereich dargestellt.

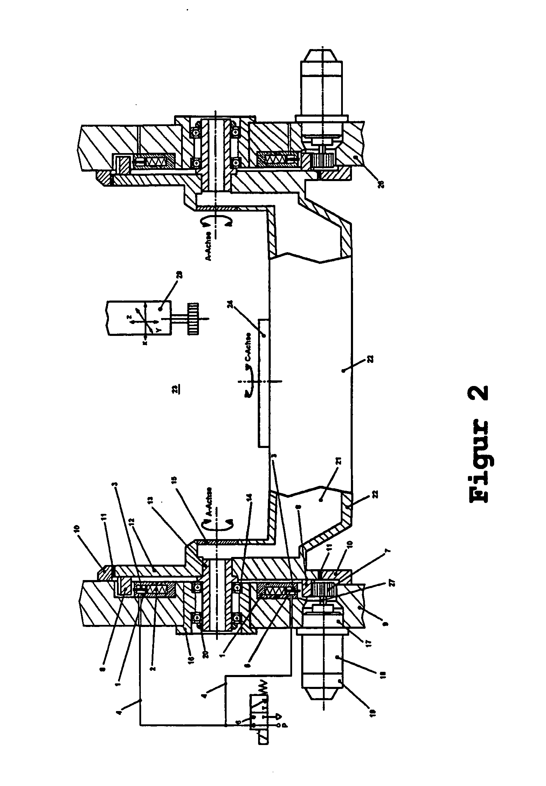

Man erkennt den linken Bereich einer Schwenkbrücke 22, welche einen drehbaren Werkstücktisch 24 (vgl. Figur 2) trägt. Auf dem Werkstücktisch 24 kann ein Werkstück aufgespannt werden, welches dann in den oberhalb der Schwenkbrücke 22 liegenden Arbeitsbereich 23 des Bearbeitungszentrums ragt und von einer in x-, y- und z-Richtung bewegbaren Werkzeugspindel 28 (vgl. Figur 2) bearbeitet werden kann.

Die Schwenkbrücke 22 ist mit einem Hohlraum 21 versehen, welcher zur Aufnahme von Energie- und Signalleitungen und ggf. von Antriebselementen dient, z. B. Zahnriemen zum Antrieb des drehbaren Werkstücktisches 24.

Die Schwenkbrücke 22 weist an einem Ende ein kreisförmiges Anschlussstück 12 auf, in dessen Mittelpunkt ein Lagerzapfen 13 angeordnet ist. Der Lagerzapfen 13 ist im vorliegenden Fall hohl ausgebildet und in einem Wälzlager 14 gelagert, das in einer Lagerbuchse 16 sitzt, die wiederum in einer Lagerwandung 9 des nicht dargestellten Bearbeitungszentrums gelagert ist.

Am freien Ende des Lagerzapfens 13 ist eine Wellenmutter 20 aufgeschraubt, welche eine sichere Lagerung der Schwenkbrücke 22 gewährleistet.

Um beispielsweise für Wartungs- und/oder Reparaturarbeiten einen Zugang zu dem Lagerzapfen 13 zu ermöglichen, ist der Lagerzapfen 13 über einen in der Schwenkbrücke 22 angeordneten Abschlussdeckel 15 zugänglich.

Außenseitig ist das Anschlussstück 12 von einem Abdichtring 10 umgeben. Weiterhin ist zwischen dem Anschlussstück 12 und dem Abdichtring 10 eine Gleit- oder Labyrinthdichtung 11 vorgesehen.

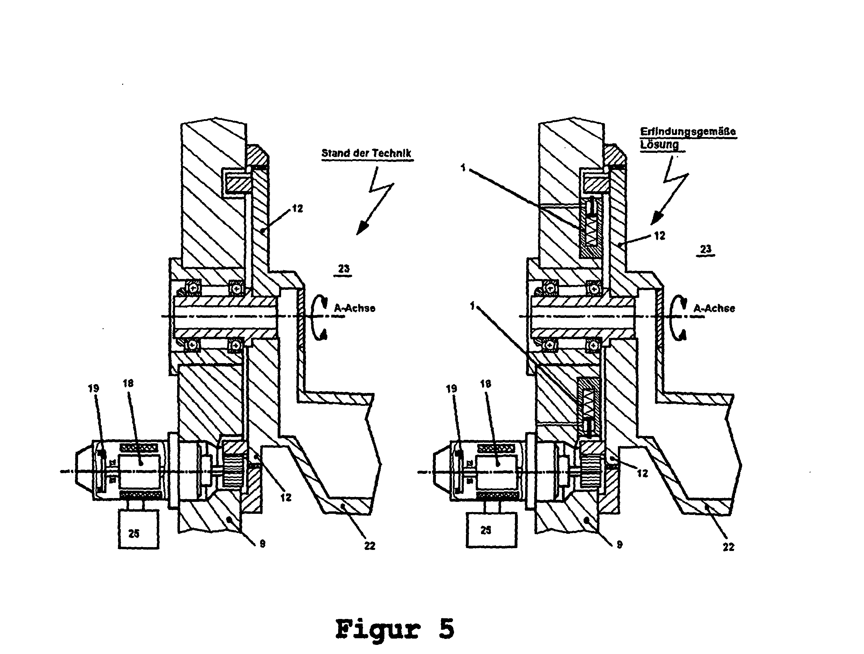

An dem Anschlussstück 12 ist nahe an dessen Außenumfang ein Antriebszahnkranz 8 angeordnet, der in Richtung des Lagerzapfens 13 von dem Anschlussstück 12 vorsteht. Der Antriebszahnkranz 8 ist mit einer Außenverzahnung versehen ist, welche mit einem Antriebszahnrad 7 kämmt, das über eine Motorwelle 27 und ein Vorsatzgetriebe 17 mit einem Antriebsmotor 18 versehen ist. Der Antriebsmotor 18 ist mit einer Motorklemmung 19 (Motorbremse) und einer Antriebsregelung 25 (vgl. Figur 5) versehen.

Über den Antriebsmotor 18 kann die Schwenkbrücke 22 um die Achse A verschwenkt werden. Außerdem wird durch die integrierte Motorklemmung 19 (Motorbremse) sowohl eine Notbremsung als auch eine Fail-Safe-Funktionalität ermöglicht. Die integrierte Motorklemmung 19 arbeitet nach dem Dauermagnetprinzip. Das heißt, geklemmt wird im stromlosen Zustand. Die Lüftung der Motorklemmung 19 erfolgt elektromagnetisch. Beim Ausschalten des Bearbeiturigszentrums (Hauptschalter AUS und Bearbeitungszentrum von der Energieversorgung galvanisch getrennt) oder bei einen unvorhersehbaren Energieausfall wird die Klemmnabe vom Magnetkörper angezogen und dadurch die Motorwelle des Antriebsmotors 18 festgehalten.

In der Lagerwandung 9 ist ein kreisringförmiges Klemmsystem 1 um den Lagerzapfen 13 herum angeordnet, welches zum Klemmen des Antriebskranzes 8 und damit der Schwenkbrücke 22 dient.

Das Klemmsystem 1 weist eine Vielzahl von radial ausgerichteten Druckstücken 5 auf. Jeder Druckstück 5 wird von einem vorzugsweise als Feder ausgebildeten Energiespeicher 2 nach außen in Richtung auf den Antriebszahnkranz 8 gedrückt. Auf der dem Energiespeicher 2 abgewandten Seite des Druckstücks 2 ist eine Druckkammer 3 vorgesehen, in welche eine Fluidleitung 4 mündet. Die Fluidleitung 4 steht mit einem elektromagnetisch betätigbaren Stellventil 6 in Verbindung. Während in Figur 1 eine einseitige Lagerung der Schwenkbrücke 22 in der Lagerwandung 9 gezeigt ist, ist in Figur 2 eine Ausführung dargestellt, bei welcher die Schwenkbrücke 22 in einer linken Lagerwandung 9 und in einer rechten Lagerwandung 26, und damit beidseitig, gelagert ist. Die Lagerung der Schwenkbrücke 22 in der rechten Lagerwandung 26 ist dieselbe wie in der linken Lagerwandung 9, so dass auf die Ausführungen zu Figur 1 verweisen werden kann.

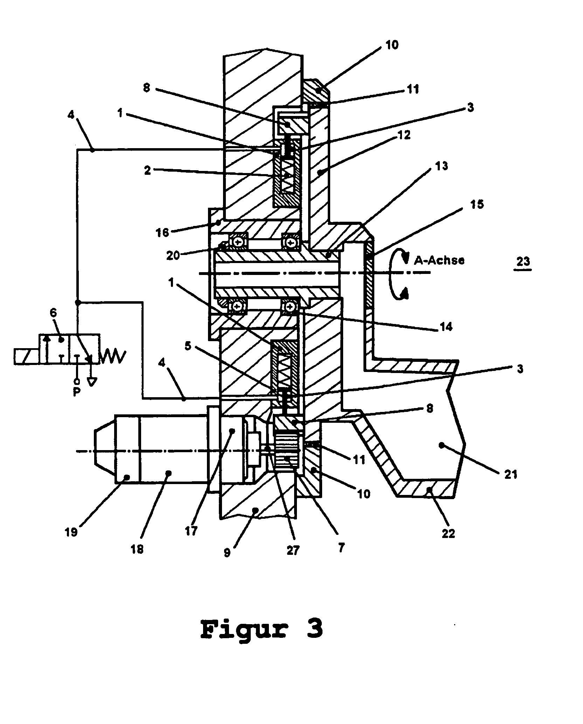

In den Figuren 1 und 2 ist ein Zustand gezeigt, bei dem das Klemmsystem 1 nicht aktiv ist, d. h. es erfolgt keine Klemmung der Schwenkbrücke 22. In Figur 3 ist ein Zustand gezeigt, bei dem das Klemmsystem 1 aktiv ist, d. h. es erfolgt eine Klemmung der Schwenkbrücke 22.

Um die Schwenkbrücke 22 zu verschwenken, steht das Stellventil 6 in der in den Figuren 1 und 2 gezeigten Stellung, in welcher die Druckkammern 3 mit Fluid beaufschlagt werden, so dass die Druckstücke 5 und damit auch die Energiespeicher 2 radial nach innen gedrückt werden. In diesem Zustand wirken die Druckstücke 5 nicht auf den Antriebszahnkranz 8 ein, so dass das Anschlussstück 12 und damit die Schwenkbrücke 22 über den Antriebsmotor 18 verschwenkt werden kann.

Um die Schwenkbrücke 22 zu klemmen, wird das Stellventil 6 elektromagnetisch von der in den Figuren 1 und 2 gezeigten Stellung in die in Figur 3 gezeigte Stellung verstellt. In dieser Stellung erfolgt keine Beaufschlagung der Druckkammern 3 mit Fluid, so dass die Druckstücke 5 durch die Energiespeicher 2 radial nach außen gedrückt werden. In diesem Zustand wirken die Druckstücke 5 auf den Antriebszahnkranz 8 ein, so dass das Anschlussstück 12 und damit die Schwenkbrücke 22 geklemmt werden.

Das Klemmsystem 1 weist zusätzlich noch eine Fail-Safe-Funktionalität auf. Das elektromagnetisch betätigbare Stellventil 6 steht im bestromten Zustand in der in den Figuren 1 und 2 gezeigten Stellung. In dieser Stellung wird die Druckkammer 3 mit Fluid beaufschlagt und das Druckstück 5 wird gegen die Kraft des Energiespeichers 2 radial nach innen gedrückt, so dass es nicht in Wirkverbindung mit dem Antriebszahnkranz 8 kommen und diesen klemmen kann.

Bei einem unvorhersehbaren Energieausfall wird das elektromagnetisch betätigbare Stellventil 6 nicht mehr mit Strom versorgt und es nimmt dann - z. B. federbelastet - die in Figur 3 gezeigte Stellung ein, in welcher die Druckkammer 3 nicht mehr mit Fluid beaufschlagt wird. Da die Druckkammer 3 nun drucklos ist, drückt der Energiespeicher 2 das Druckstück 5 radial nach außen, so dass es auf den Antriebszahnkranz 8 einwirkt und diesen klemmt.

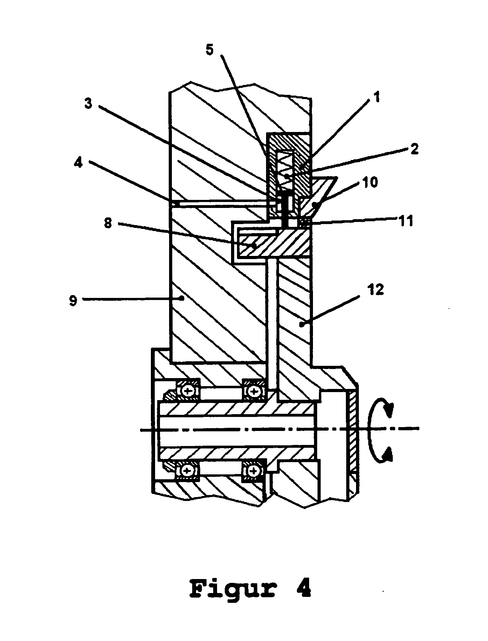

In Figur 4 ist eine weitere Ausführungsform dargestellt, bei welcher das Klemmsystem 1 nicht von innen auf den Antriebszahnkranz 8 einwirkt, wie in den Figuren 1 bis 3 zu sehen, sondern von außen. Ansonsten ist der Aufbau und die Funktion die gleiche wie im Zusammenhang mit den Figuren 1 bis 3 erläutert.

In der Figur 5 ist eine Gegenüberstellung eines Bearbeitungszentrums nach dem Stand der Technik (links) und nach der Erfindung (rechts) zu sehen. Während beim Stand der Technik die Klemmung der Schwenkbrücke 22 und auch die Fail-Safe-Funktion einzig und allein über den Antriebsmotor 19 erfolgt, ist erfindungsgemäß die Klemmung der Schwenkbrücke 22 vom Antriebsmotor 19 entkoppelt, so dass der Antriebsmotor 19 allein für das Verschwenken der Schwenkbrücke 22 zuständig ist, während das Klemmsystem 1 für die Klemmung sorgt. Infolge dieser Ausgestaltung wird auch die Fail-Safe-Funktionalität redundant, da im Falle eines unerwarteten Stromausfalls sowohl der Antriebsmotor 19 als auch das Klemmsystem 1 für eine Klemmung der Schwenkbrücke 22 sorgen können.

Alternativ kann die Klemmkraft für die Betriebsklemmung anstatt durch einen mechanischen Federspeicher, wie in den Figuren dargestellt und beschrieben, auch durch einen hydraulischen oder pneumatischen Druckspeicher erzeugt werden.

Anstelle des in den Figuren dargestellten und durch Federn gebildeten Energiespeichers 2 kann auch eine ringförmig angeordnete radial elastisch verformbare Membrane in Scheibenform verwendet werden.

Weiterhin kann das Klemmsystem 1 statt auf den Antriebszahnkranz 8 auch auf das Anschlussstück 12 der Schwenkbrücke 22 wirken. In einem solchen Fall würde das Druckstück 5 nicht radial, sondern axial verschiebbar sein.

### Bezugszeichenliste

- 1: Klemmsystem
- 2: Energiespeicher
- 3: Druckkammer
- 4: Fluidleitung
- 5: Druckstück
- 6: Stellventil
- 7: Antriebszahnrad
- 8: Antriebszahnkranz
- 9: Lagerwandung
- 10: Abdichtring
- 11: Gleitdichtung bzw. Labyrinthdichtung
- 12: Anschlussstück
- 13: Lagerzapfen
- 14: Wälzlager
- 15: Abschlussdeckel
- 16: Lagerbuchse
- 17: Vorsatzgetriebe
- 18: Antriebsmotor
- 19: Motorklemmung
- 20: Wellenmutter
- 21: Hohlraum
- 22: Schwenkbrücke
- 23: Arbeitsbereich
- 24: Werkstücktisch
- 25: Antriebsregelung
- 26: Lagerwandung
- 27: Motorwelle
- 28: Werkzeugspindel

## Patentansprüche

1. Bearbeitungszentrum zum Bohren, Fräsen oder Drehen oder Schleifen mit einer um eine horizontale Achse schwenkbar zwischen zwei Lagerwandungen (9, 26) gelagerten Schwenkbrücke (22), mit wenigstens einem Antriebszahnkranz (8), der an einem scheibenartigen Anschlussstück (12) der Schwenkbrücke (22) angebracht ist, mit wenigstens einem Antriebssystem (7, 17, 18, 19, 27), das außen an der Lagerwandung (9, 26) angebracht ist und mit dem Antriebszahnkranz (8) der Schwenkbrücke (22) in einer Wirkverbindung steht, **dadurch gekennzeichnet, dass** die Betriebsklemmung der Schwenkbrücke (22) mit einem reibschlüssigen Klemmsystem (1) erfolgt, das kreisringförmig um den Lagerzapfen (13) der Schwenkbrücke (22) herum drehfest angeordnet ist und mit dem scheibenartigen Anschlussstück (12) in einer Wirkverbindung steht und dass die Klemmkraft des reibschlüssigen Klemmsystems (1) durch einen Energiespeicher (2) erzeugt wird.

2. Bearbeitungszentrum nach Anspruch 1, **dadurch gekennzeichnet, dass** der Energiespeicher (2) zur Erzeugung der Klemmkraft für die Betriebsklemmung aus einem mechanischen Federspeicher besteht.

3. Bearbeitungszentrum nach Anspruch 1, **dadurch gekennzeichnet, dass** der Energiespeicher (2) zur Erzeugung der Klemmkraft für die Betriebsklemmung aus einem hydraulischen oder pneumatischen Druckspeicher besteht.

4. Bearbeitungszentrum nach Anspruch 2, **dadurch gekennzeichnet, dass** der mechanische Federspeicher aus mehreren ringförmig angeordneten Federn oder aus einer ringförmig angeordneten radial elastisch verformbaren Membrane in Scheibenform besteht.

5. Bearbeitungszentrum nach einem der Ansprüche 1 bis 4, **dadurch gekennzeichnet, dass** das reibschlüssige Klemmsystem (1) mit einem Druckstück (5) versehen ist, welches von dem Federspeicher (2) in Richtung auf den Antriebszahnkranz (8) belastet ist.

6. Bearbeitungszentrum nach einem der Ansprüche 1 bis 5, **dadurch gekennzeichnet, dass** das reibschlüssige Klemmsystem (1) für die Betriebsklemmung eine Fail-Safe-Funktionalität aufweist derart, dass bei Energieausfall zwangsläufig mit dem Energiespeicher (2) geklemmt wird.

7. Bearbeitungszentrum nach einem der Ansprüche 1 bis 6, **dadurch gekennzeichnet, dass** das reibschlüssige Klemmsystem (1) für die Betriebsklemmung beidseitig an den Lagerwandungen (9, 26) der Schwenkbrücke (22) angeordnet ist.

8. Bearbeitungszentrum nach einem der Ansprüche 1 bis 7, **dadurch gekennzeichnet, dass** das reibschlüssige Klemmsystem (1) für die Betriebsklemmung als kreisringförmiges Radial-Klemmsystem ausgeführt ist.

9. Bearbeitungszentrum nach Anspruch 8, **dadurch gekennzeichnet, dass** die Klemmung radial nach außen oder nach innen derart erfolgt, dass das Druckstück (5) beim Klemmen nach außen bzw. nach innen gedrückt wird.

10. Bearbeitungszentrum nach einem der Ansprüche 1 bis 9, **dadurch gekennzeichnet, dass** das kreisringförmige Radial-Klemmsystem auf den Antriebszahnkranz (8) der Schwenkbrücke (22) einwirkt.

11. Bearbeitungszentrum nach Anspruch 10, **dadurch gekennzeichnet, dass** das kreisringförmige Radial-Klemmsystem nach außen auf den Antriebszahnkranz (8) die Schwenkbrücke (22) klemmt.

12. Bearbeitungszentrum nach einem der Ansprüche 1 bis 9, **dadurch gekennzeichnet, dass** das kreisringförmige Radial-Klemmsystem auf das scheibenartige Anschlussstück (12) der Schwenkbrücke (22) einwirkt.

13. Bearbeitungszentrum nach Anspruch 12, **dadurch gekennzeichnet, dass** das kreisringförmige Radial-Klemmsystem nach innen auf das scheibenartige Anschlussstück (12) der Schwenkbrücke (22) klemmt.

14. Bearbeitungszentrum nach einem der Ansprüche 1 bis 13, **dadurch gekennzeichnet, dass** die Schwenkbrücke (22) zwei unabhängig voneinander wirkende Klemmsysteme mit Fail-Safe-Funktionalität aufweist, nämlich ein erstes Klemmsystem gebildet durch eine Motorklemmung mit Fail-Safe-Funktionalität am Antriebsmotor (18) der Schwenkbrücke (22) und ein zweites Klemmsystem gebildet durch das Klemmsystem (1) mit Fail-Safe-Funktionalität an den Lagerzapfen (13) der Schwenkbrücke (22).

## Claims

1. A processing center for drilling, milling or lathing or grinding including a pivoting bridge (22) supported between two bearing walls (9, 26) to be pivotable about a horizontal axis, comprising
at least one driving crown gear (8) attached to a disc-type adapter (12) of the pivoting bridge (22),
at least one driving system (7, 17, 18, 19, 27) attached outside to the bearing wall (9, 26) and co-operating with the driving crown gear (8) of the pivoting bridge (22),
**characterized in that** the operative clamping of the pivoting bridge (22) is performed with a frictionally engaged clamping system (1) which is circularly annularly arranged about the bearing pin (13) of the pivoting bridge (22) to be rotationally fixed and co-operates with the disc-type adapter (12), and that the clamping force of the frictionally engaged clamping system (1) is generated by an energy storage (2).

2. The processing center of claim 1, **characterized in that** the energy storage (2) for generating the clamping force for the operative clamping consists of a mechanical spring accumulator.

3. The processing center of claim 1, **characterized in that** the energy storage (2) for generating the clamping force for the operative clamping consists of a hydraulic or pneumatic air accumulator.

4. The processing center of claim 2, **characterized in that** the mechanical spring accumulator consists of a plurality of annularly arranged springs or of an annularly arranged, radially elastically deformable diaphragm in the form of a disc.

5. The processing center of one of claims 1 to 4, **characterized in that** the frictionally engaged clamping system (1) is provided with a pressure piece (5) which is loaded by the spring accumulator (2) toward the driving crown gear (8).

6. The processing center of one of claims 1 to 5, **characterized in that** the frictionally engaged clamping system (1) for the operative clamping comprises a fail-safe function such that it is clamped inevitably with the energy storage (2) in case of an energy loss.

7. The processing center of one of claims 1 to 6, **characterized in that** the frictionally engaged clamping system (1) for the operative clamping is arranged on both sides of the bearing walls (9, 26) of the pivoting bridge (22).

8. The processing center of one of claims 1 to 7, **characterized in that** the frictionally engaged clamping system (1) for the operative clamping is embodied as a circularly annular radial clamping system.

9. The processing center of claim 8, **characterized in that** the clamping is performed radially outwardly or inwardly such that the pressure piece (5) is pushed outwardly or inwardly during clamping.

10. The processing center of one of claims 1 to 9, **characterized in that** the circularly annular radial clamping system acts on the driving crown gear (8) of the pivoting bridge (22).

11. The processing center of claim 10, **characterized in that** the circularly annular radial clamping system clamps outwardly onto the driving crown gear (8) of the pivoting bridge (22).

12. The processing center of one of claims 1 to 9, **characterized in that** the circularly annular radial clamping system acts on the disc-type adapter (12) of the pivoting bridge (22).

13. The processing center of claim 12, **characterized in that** the circularly annular radial clamping system clamps inwardly onto the disc-type adapter (12) of the pivoting bridge (22).

14. The processing center of one of claims 1 to 13, **characterized in that** the pivoting bridge (22) comprises two clamping systems having a fail-safe function operating independent of each other, i. e. a first clamping system formed by a motor clamping with fail-safe function at the driving motor (18) of the pivoting bridge (22) and a second clamping system formed by the clamping system (1) with fail-safe function at the bearing pins (13) of the pivoting bridge (22).

## Revendications

1. Centre d'usinage pour le perçage, le fraisage ou le tournage ou le meulage, comportant un pont pivotant (22), monté entre deux parois de support (9, 26) de manière à pouvoir pivoter autour d'un axe horizontal, comportant au moins une couronne dentée d'entraînement (8) qui est montée sur un élément d'assemblage (12) en forme de disque du pont pivotant (22), comportant au moins un système d'entraînement (7, 17, 18, 19, 27), qui est monté à l'extérieur sur la paroi de support (9, 26) et est mis en liaison active avec la couronne dentée d'entraînement (8) du pont pivotant (22), **caractérisé en ce que** le pont pivotant (22) est bloqué en cours de service au moyen d'un système de blocage par friction (1), qui est agencé, de manière immobile en rotation, sous forme annulaire autour du tourillon (13) du pont pivotant (22) et est en liaison active avec l'élément d'assemblage (12) en forme de disque, et **en ce que** la force de blocage du système de blocage par friction (1) est générée par un accumulateur d'énergie (2).

2. Centre d'usinage selon la revendication 1, **caractérisé en ce que** l'accumulateur d'énergie (2), destiné à générer la force de blocage pour le blocage en cours de service, est formé par un accumulateur à ressort mécanique.

3. Centre d'usinage selon la revendication 1, **caractérisé en ce que** l'accumulateur d'énergie (2), destiné à générer la force de blocage pour le blocage en cours de service, est formé par un accumulateur de pression hydraulique ou pneumatique.

4. Centre d'usinage selon la revendication 2, **caractérisé en ce que** l'accumulateur à ressort mécanique est formé par plusieurs ressorts agencés sous forme annulaire ou par une membrane en forme de disque élastiquement déformable dans le sens radial et disposée sous forme annulaire.

5. Centre d'usinage selon l'une quelconque des revendications 1 à 4, **caractérisé en ce que** le système de blocage par friction (1) est muni d'un élément de pression (5), qui est sollicité par l'accumulateur à ressort (2) dans la direction vers la couronne dentée d'entraînement (8).

6. Centre d'usinage selon l'une quelconque des revendications 1 à 5, **caractérisé en ce que** le système de blocage par friction (1) pour le blocage en cours de service possède une fonctionnalité de sécurité intégrée (fail-safe), de telle sorte qu'en cas de panne d'énergie, le blocage est effectué nécessairement par l'accumulateur d'énergie (2).

7. Centre d'usinage selon l'une quelconque des revendications 1 à 6, **caractérisé en ce que** le système de blocage par friction (1) pour le blocage en cours de service est disposé sur les deux côtés contre les parois de support (9, 26) du pont pivotant (22).

8. Centre d'usinage selon l'une quelconque des revendications 1 à 7, **caractérisé en ce que** le système de blocage par friction (1) pour le blocage en cours de service est réalisé sous la forme d'un système de blocage radial en forme d'anneau de cercle.

9. Centre d'usinage selon la revendication 8, **caractérisé en ce que** le blocage est effectué radialement vers l'extérieur ou vers l'intérieur, de telle sorte que l'élément de pression (5) est poussé vers l'extérieur ou vers l'intérieur pendant le blocage.

10. Centre d'usinage selon l'une quelconque des revendications 1 à 9, **caractérisé en ce que** le système de blocage radial en forme d'anneau de cercle agit sur la couronne dentée d'entraînement (8) du pont pivotant (22).

11. Centre d'usinage selon la revendication 10, **caractérisé en ce que** le système de blocage radial en forme d'anneau de cercle bloque le pont pivotant (22) vers l'extérieur sur la couronne dentée d'entraînement (8).

12. Centre d'usinage selon l'une quelconque des revendications 1 à 9, **caractérisé en ce que** le système de blocage radial en forme d'anneau de cercle agit sur l'élément d'assemblage (12) en forme de disque du pont pivotant (22).

13. Centre d'usinage selon la revendication 12, **caractérisé en ce que** le système de blocage radial en forme d'anneau de cercle bloque le pont pivotant (22) vers l'intérieur sur l'élément d'assemblage (12) en forme de disque.

14. Centre d'usinage selon l'une quelconque des revendications 1 à 13, **caractérisé en ce que** le pont pivotant (22) comporte deux systèmes de blocage avec une fonctionnalité de sécurité intégrée, agissant indépendamment l'un de l'autre, à savoir un premier système de blocage formé par un blocage du moteur avec une fonctionnalité de sécurité intégrée au niveau du moteur d'entraînement (18) du pont pivotant (22) et un deuxième système de blocage formé par le système de blocage (1) avec la fonctionnalité de sécurité intégrée au niveau du tourillon (13) du pont pivotant (22).
